# EUROPEAN PATENT APPLICATION

(11) **EP 0 643 097 A1**
(43) Date of publication of application: **15.03.1995**
(21) Application number: 93402246.8
(22) Date of filing: 15.09.1993
(51) Int. Cl.: C08K 13/02, C08K 3/32

(54) **Glass/polymer composites with phosphoric acid ester stabilizers**

(71) Applicant: Corning Incorporated, Corning New York 14831 (US)
(72) Inventor: Carre, Alain Robert Emile, SP FR 02-12, Corning, NY 14831 (US); Vial, Jacques Jean, SP FR 02-12, Corning, NY 14831 (US)
(74) Representative: Aron, Georges

(57) **Abstract**

This invention discloses a phosphate-based glass/organic polymer composite material of increased resistance to moisture, and a method of producing such a composite, which comprises a mixture of the following components: a matrix material comprised of at least one organic thermoplastic or thermosetting polymer; at least one phosphate glass; and, an amount of a phosphoric acid ester stabilizer component sufficient to improve the moisture resistance of the composite. Preferably, the mixture is comprised of three basic components in the approximate indicated weight proportions: 1-99.5% of the matrix material; 0.1-95% of the phosphate glass; and, 1 to 20% of the phosphoric acid ester stabilizer component.

## Description

### FIELD OF THE INVENTION

The present invention relates to a more durable glass/polymer composite and a method for increasing the durability of the composite. In general, it involves the addition of a third component phosphoric acid ester to the glass/polymer composite, resulting in a glass/polymer composite with decreased glass agglomeration and increased glass/polymer interaction.

### BACKGROUND OF THE INVENTION

Composite bodies containing organic polymers are well known to the art. Generally speaking, polymer composites, which may be regarded as multi-phase materials of two or more components in which the polymer comprises the continuous phase, can be considered as containing fillers or reinforcing agents, the function of the two frequently overlapping. Thus, polymer composites have conventionally consisted of a base polymer containing additives such as plasticisers, colorants, flame retardants, reinforcing fibers and/or whiskers, fillers and stabilizers against heat and/or sunlight.

Such filled plastic products are commercially available and customarily consist of organic polymers enveloping discrete organic or inorganic particles, flakes, fibers, whiskers, or other configurations of materials. These filler materials may be incorporated principally for the purpose of reducing the overall cost of the product without seriously undermining the properties of the polymer. For example, clays and talc have been added as inexpensive fillers. On the other hand, the filler materials may have been included to impart some improvement to a particular physical property exhibited by the polymer. For example, ceramic or glass fibers have been entrained in polymer bodies to provide reinforcement thereto. The higher strength demonstrated by those products is primarily dependent upon strong bonding between the inorganic fibers and the organic polymers.

Within the past two decades some research has been conducted to investigate the possibility of forming composite bodies consisting of inorganic glasses exhibiting low transition temperatures and organic polymers, which bodies would, desirably, demonstrate the combined properties of glass ad plastic. Illustrative of that research is U.S. Pat. No. 3,732,181 (Ray et al.). As is observed there, the decomposition temperatures of known thermoplastic and thermosetting resins are so low that glass compositions where SiO₂ is the principal network or glass former cannot be employed. Hence, to be operable the T_{g} of the glass will be below 450°C and preferably below 350°C. (As customarily defined, the T_{g} of a glass is the temperature at which increases in specific heat and coefficient of thermal expansion take place which are accompanied by a sharp drop in viscosity. This temperature is frequently deemed to lie in the vicinity of the glass annealing point.) That temperature limitation led to the use of glasses wherein P₂O₅ and/or B₂O₃ comprises the primary glass forming component. It is further explained there that, whereas thermoplastic resins have been principally investigated for use in glass-plastic composite articles, thermosetting resins which can be obtained as heat softenable precursors are also operable. Such resins can be blended with the glass into composite bodies with the reshaping and final heat curing being completed in a single operation.

U.S. Pat. No. 3,732,181, supra, describes seven general methods wherein glass in the form of fibers, films, flakes, powders, or sheets is combined with a polymer and that composite is fashioned into a desired configuration through a variety of shaping means including compression molding, drawing, extrusion, hot pressing, injection molding, and spinning. The patent states that the ratio of polymer to glass may range from 0.1:99.9 to 99.9:0.1 on a volume basis, but also observes that the concentration of glass in the polymer typically ranges about 5-66% by volume.

Experience in the glass composition art has indicated that borate-based and phosphate-based glasses normally exhibit poorer chemical durability and resistance to moisture attack than silica-based compositions, and that failing becomes even more exacerbated as such glasses are formulated to demonstrate lower transition temperatures. For example, phosphate-based glasses manifesting a low T_{g} are commonly degraded when exposed to atmospheres of high humidity and not infrequently are actually hygroscopic. This lack of resistance to attack by moisture frequently encountered in phosphate-based glass compositions is evidenced in the rate of dissolution data provided in U.S. Pat. No. 3,732,181 with respect to the glasses utilized in the working examples. Because of this poor resistance to chemical and moisture attack evidenced by phosphate-based and borate-based glasses having a low T_{g}, glass-plastic composite articles fabricated from glasses and polymers which are thermally co-deformable at similar temperatures have not been marketed to any substantial extent. Thus, whereas the glass-plastic composite articles known to the art are not porous in a physical sense, the polymers are permeable to water; which permeability permits water to migrate into the article and thereby come into contact with the glass particles. Accordingly, because of the high surface area of the glass flakes, fibers, powders and the like present in the composite articles, degradation thereof can proceed rapidly. That situation becomes more pronounced as the proportion of glass in the composite is increased. Yet, to produce articles exhibiting high stiffness, high hardness, and good mechanical strength, the glass component should constitute the greater proportion thereof.

### SUMMARY OF THE INVENTION

Accordingly, an objective of the invention was to produce a phosphate-based glass/organic polymer composite and a method for making such a composite which exhibits increased durability, thereby rendering the composite less susceptible to hydration.

A further objective of the invention was to provide a phosphoric acid ester stabilizer for addition to, and stabilizing process for use with, that glass/polymer composite which significantly slows the reaction of water with the phosphate glass.

Still another objective of this invention was to provide for a glass/polymer composite of the type described above which possessed a decreased agglomeration of the phosphate glass phase, i.e., increased interface quality and glass affinity for the polymer, which, in turn, substantially slows the water uptake into the composite, thereby rendering the glass less susceptible to hydration.

Still another objective of this invention was to provide for a glass/polymer composite which maintains its physical performance properties over an extended period of time.

Hence, this invention discloses a phosphate-based glass/organic polymer composite material of increased resistance to hydration, and a method for making such a composite, comprising a mixture of the following components: a matrix material comprised of at least one organic thermoplastic or thermosetting polymer; at least one phosphate glass; and, an amount of a phosphoric acid ester stabilizer component sufficient to improve the moisture resistance of the composite. Preferably, the mixture is comprised of three basic components in the approximate indicated weight proportions: 1-99.5% of the matrix material; 0.1-95% of the phosphate glass; and, 1 to 20% of the phosphoric acid ester stabilizer component.

The phosphoric acid ester stabilizer component is selected from the group consisting of triarylphosphates such as trixylyphosphate, tricresylphosphate, triphenylphosphate, cresyldiphenylphosphate, t-butylphenyldiphenylphosphate, triisopropylphenylphosphate, alkyldiarylphosphates such as octyldiphenylphosphate and trialkylphosphates such as tributylphosphate. In the preferred embodiment, tricresylphosphate was utilized as the stabilizer component.

### PRIOR ART

U.S. Patent No. 4,849,135 (Reitz) discloses the addition of certain phosphate esters to ethylene copolymer matrices containing CaCO₃ and/or Ca-Mg/CO₃ and alumina trihydrate to have lower swell on burning and to have smaller and more uniform cell formation in the ceramic ash than compositions without such esters present.

The use of phosphate esters as surfactants is well known in the art and is disclosed as such in U.S. Pat. No. 4,851,463 (Opsahl et al.) and U.S. Pat. No. 4,430,468 (Schumacher).

However, none of the references discloses the use of phosphoric acid esters as an additive to increase the durability, interface quality and glass dispersion.

### BRIEF DESCRIPTION OF THE DRAWINGS

FIGS. 1-6 are scanning electron micrographs illustrating the effect of the phosphoric acid ester on the microstructure on the glass/polymer composite.

FIG. 7 is a graph illustrating the effect of the phosphoric acid ester stabilizer on the durability of the glass/polymer composite.

### DETAILED DESCRIPTION OF THE INVENTION

The term composite as used herein is defined as something made up of distinct parts, i.e, an organic polymer with a glass filler. Specifically, in the instant invention the composites are certain engineering polymers filled with a low temperature phosphate glass or other inorganic oxide glass. In other words, there is no intimate mixing or interaction between the distinct glass and polymer parts in a glass/polymer composite.

The term composite should be distinguished from the term alloy used in U.S. Pat. No. 5,043,069 (Bahn et al.), wherein alloy is defined as a glass/polymer material which exhibits a uniform fine-grained microstructure resulting from the interaction between a phosphate glass phase and an organic polymer phase. Uniform fine-grained microstructure is defined more fully within that reference.

The instant invention discloses a composite material of increased resistance to moisture comprising a mixture of the following components: a matrix material comprised of at least one organic thermoplastic or thermosetting polymer; at least one phosphate glass; and, an amount of at least one phosphoric acid ester stabilizer component sufficient to improve the moisture resistance of the composite, i.e., that amount which is effective in reducing the weight gain of the composite over time. Preferably, the mixture is comprised of three basic components in the approximate indicated weight proportions: 1-99.5% of the matrix material; 01.-95% of the phosphate glass; and, 1 to 20% of the phosphoric acid ester stabilizer component.

As described above, the inventive composite preferably contains about 0.1-95 weight percent of a phosphate glass, which, as used herein, is any low temperature inorganic oxide glass that has a composition within the following range expressed in terms of mole percent on the oxide basis: about at least 65% total of 10-55% ZnO, 28-40% P₂O₅, and 10-35% R₂O, wherein R₂O consists of at least two alkali metal oxides in the indicated proportions selected from the group consisting of 0-25% Li₂O, 0-25% Na₂O, and 0-25% K₂O. In addition, up to a 35% total of optional ingredients may be added to the base glass composition; the optional constituents are selected from the group consisting of 0-10% Al₂O₃, 0-15% B₂O₃, 0-15% Cu₂O, 0-25% Sb₂O₃, 0-35% PbO, 0-35% SnO, 0-5% ZrO₂, 0-4% SiO₂, 0-20% MgO, 0-20% CaO, 0-20% SrO, 0-20% BaO, 0-10% MnO, 0-10% WO₃, 0-10% MoO₃, 0-5% rare earth metal oxide, and 0-5% F, the fluoride being present as analyzed in weight percent. However, the above glass composition does have the following further amount limitations: the amount of Al₂O₃+B₂O₃ does not exceed 15%, the amount of WO₃+MoO₃ does not exceed 15% and the total combined amount of MgO+CaO+SrO+BaO+MnO does not exceed 20%.

The following preferred glass composition, with a T_{g} of approximately 350°C, expressed in terms of mole percent on the oxide basis, was used in preparing the inventive glass/plastic composite examples disclosed herein: 33% P₂O₅, 43% ZnO, 2% Al₂O₃ 6% Li₂O, 7% Na₂O, 7% K₂O and 2% SiO₂. The glass was compounded from oxide, carbonate, and phosphate batch materials. Those batch materials were automatically tumble-mixed or ballmilled and melted in silica crucibles at temperatures in the vicinity of 1000°C for times of about three hours. Very little volatilization of P₂O₅ was noted, as the analyzed values of P₂O₅ were typically only a few tenths percent below that calculated from the batch.

Because a pulverized material was desired to form feedstock for mixing, the melts were poured through patterned metal rollers to produce a textured surface which was easily crushed to predetermined-sized fragments; or more preferably the melts were poured as a fine stream into a bath of cold water, a practice termed "drigaging". If desired, the glass particles/fragments could have been pelletized for ease of handling.

The polymer matrix material, preferably comprising about 1-99.5 weight percent of the inventive composite disclosed herein, consists of at least one organic thermoplastic or thermosetting polymer. The matrix material utilized in the instant specification's later-disclosed examples was a high temperature thermoplastic, specifically, polyethersulfone (PES). Although the instant specification describes only composites containing PES, it is contemplated that the increase in durability due to addition of a stabilizer agent disclosed herein would be effective in any composite which contained a phosphate glass and a polymer. Polymers specifically contemplated as within the scope of the invention are thermoplastics, such as polypropylene, polyaryletherketones, polyoleflns, acrylonitrile-butadiene-styrene copolymers, polystyrenes, polyphenylene sulfides, polyfluoro resins, polyetherimides, liquid crystal polyesters, polyetheretherketones, polyetherketones, polyethylterephthalates, polybutylterephthalates, melamines, polyamides, polyphosphazenes and polycarbonates. Thermosets such as epoxy resins, silicone resins, polyimides, phenolics, and diallyl phthalates should also be included within the scope of the invention.

The phosphoric acid ester stabilizer component, comprising preferably about 1 to 20 weight percent of the total composite mixture, should ideally be added in a sufficient amount whereby the resultant composite will possess a durability which is improved over that exhibited by an unstabilized composite. In other words, a "stabilized composite" is one in which there is an improvement in durability as evidenced by a decrease in the percent weight gain of the composite over time. It is important to note that a stabilized composite, i.e., one which possesses the sufficient amount of a stabilizer, cannot be defined by a standard test (e.g. less than X % weight gain in 50°C in X hours), because the amount of water that the composite absorbs and, ultimately the weight the lower durability glass component gains, is variable depending upon the amount of glass in the blend and the transmission rate of the polymer utilized in the composite; water transmission varies from polymer-to-polymer and as well as from test temperature-to-test temperature. Therefore, although the instant invention measures the weight gain at 95°C for a PES-based composite, the improvement cannot be defined in terms of these conditions because of this variability.

Tricresylphosphate (TCP) is representative of the phosphoric acid ester type of stabilizer component and was preferably used. Phosphoric acid esters, such as TCP, which are utilized in the inventive composite possessed a relatively high boiling point, approximately greater than 400°C, e.g., ortho tricresylphosphate has a boiling point of 410°C. Specifically, the boiling point of any stabilizer utilized is higher than the processing temperature of the composite. Also, it is imperative to note that any phosphoric acid ester effective as a stabilizer or compatiblizing agent was not only temperature, but chemically, compatible with the forming/extrusion process used to prepare the glass/polymer composite. Although toxicity is a concern for both the para or meta isomers, they are usually preferred over the ortho forms in the plastics industry. The para and meta isomers, although requiring careful handling, are not as toxic as the highly toxic ortho isomers.

Other phosphoric acid esters comparable to tricresylphosphate which are also useful for glass/polymer composites stabilizer components include materials such as trixylyphosphate, which has a boiling point of 420°C under 760 mm of Hg. The following list gives other non-limitative examples which would likely be effective compatiblizer/stabilizer agents: triarylphosphates, such as trixylyphosphate, tricresylphosphate, triphenylphosphate, cresyldiphenylphosphate, t-butylphenyldiphenylphosphate, and triisopropylphenylphosphate, alkyldiarylphosphates such as octyldiphenylphosphate and trialkylphosphates, such as tributylphosphate.

One method used to incorporate the stabilizer agent into the composite involved coating the phosphate glass particles with the stabilizer prior to the actual composite processing or formation. For example, in order to form the glass/polymer composite examples disclosed in the preferred embodiment, the glass particles were first coated with the phosphoric acid ester tricresylphosphate (TCP). The TCP was first dissolved in Tetrahydrofuran (THF) to form a solution to which the already-formed glass particles were added. This resulted in the complete wetting of the glass particles with the stabilizer component. This particular solvent was utilized because it was be easily eliminated by evaporation before processing the composite, although any solvent which would provide a solution would be acceptable. One benefit of the pre-coating procedure is that it achieved a uniform coating of the stabilizer on the glass particles.

As an alternative to or as a compliment to the precoating method, the stabilizer component could have been added directly, as a third component, to the composite during the actual compounding, i.e., during the composite processing of the glass and the polymer.

The following description outlines specific mixing, stabilization and molding parameters employed in the preparation of the examples reported below:
In each example the glass fragments/pellets, either coated or uncoated (depending upon the method chosen), having an average particle size of about 10 microns were dried overnight in a forced air oven operating at about 150°C. Once dried the glass fragments/pellets were subsequently mixed with pellets of polymer having a similar average particle size and, if the method utilized required it, along with a solid form of the phosphoric acid stabilizer. A Torque rheometer mixing bowl, marketed by the Haake Buchler Corporation, Saddle Brook, N.J., under the designation System 40, was used to achieve the desired mixing of the stabilizer-coated glass and polymer. The glass, polymer and stabilizer were mixed for 5-10 minutes at a temperature of 325°C and at 100 RPM; however, it must be noted that the PES was premelted for 2 minutes prior to mixing with the glass. Once thoroughly mixed, the glass/polymer mixture was compression molded at 330°C into test bars (3mm x 13mm x 129 mm).

The following examples, tables and figures further illustrate the various aspects of the invention.

### EXAMPLES

TABLE I records several representative composite compositions, both stabilized and unstabilized (for comparison purposes), which were prepared utilizing the preferred glass composition recited above and then compression molded as described above. These test bars were then utilized in the later-described durability tests. In Table I the abbreviations present therein have the following meanings:
PES refers to the polyethersulfone currently marketed as 5200 G and commercially available from Imperial Chemical Industries PLC, London England.

TCP refers to the use of tricresylphosphate as the stabilizer.

P-glass refers to the use of the earlier-described preferred phosphate glass composition.

The ratios of glass to polymer to stabilizer, e.g., 48.5/48.5/3;P-glass/PES/TCP, reflect weight percent glass to weight percent polymer to weight percent stabilizer. In other words, 48.5 percent P-glass to 48.5 percent polyethersulfone to 3 percent tricresylphosphate stabilizer.

**TABLE I**

| Composite Example | Weight Ratio | Components |
|---|---|---|
| 1 | 50/50/0 | P-glass/PES/-- |
| 2 | 48.5/48.5/3 | P-glass/PES/TCP |
| 3 | 45.8/45.8/8.4 | P-glass/PES/TCP |

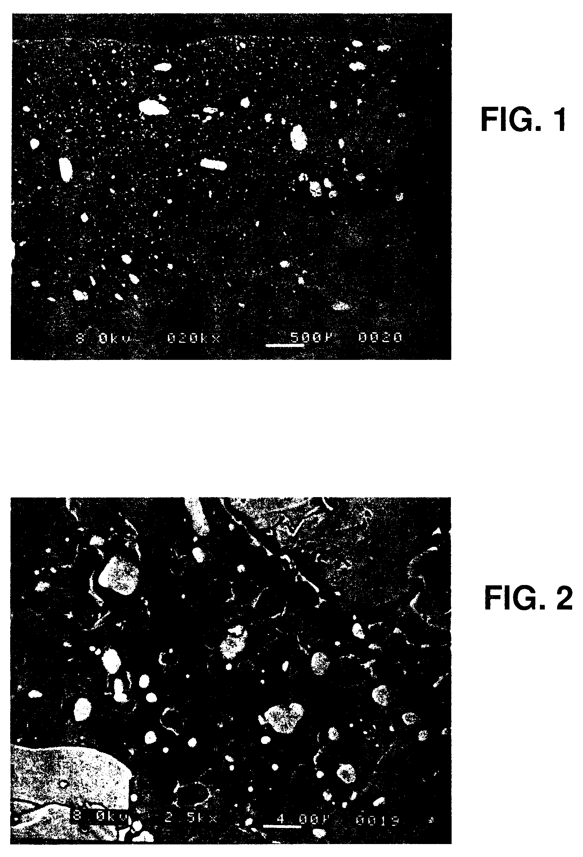

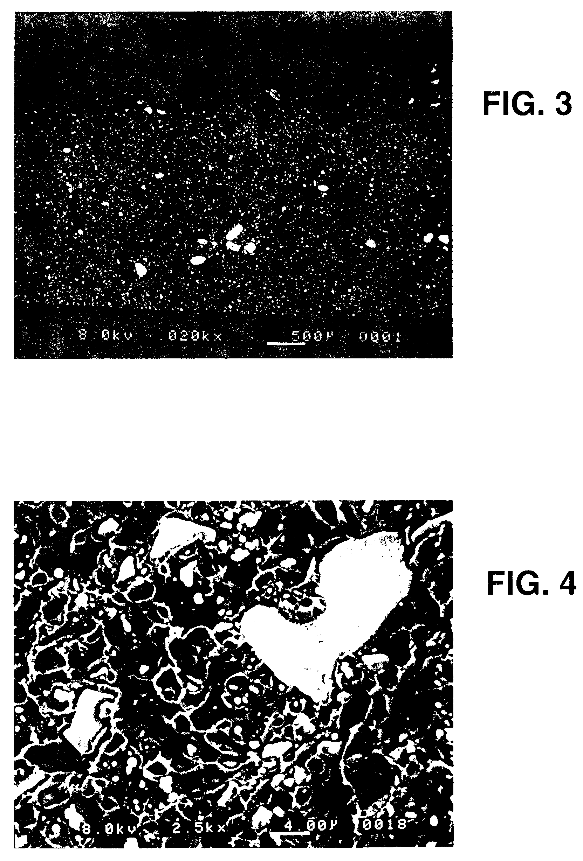

FIGS. 1 and 2 are scanning electron micrographs taken at magnifications of 20 and 2500, respectively, of a cold fracturing section of the composite article reported above as Example 1. The bar at the bottom of the micrographs represents 500 microns and 4 microns, respectively. As can be observed in the micrographs, large glass particles of approximately 300 µm are formed during the compounding of the blend. Because the glass particle size was initially approximately 10 µm, the large size shown in the micrograph indicates that the glass particles have agglomerated. Furthermore, the numerous empty cavities which appear on the composites, fracture surfaces and the free spaces visible between the polymer and the glass indicate that there is practically no interaction between the polymer and the glass. Therefore, the agglomeration of the glass particles is likely a result of the glass's weak affinity for the polymer matrix.

FIGS. 3 and 4 are scanning electron micrographs taken at magnifications of 20 and 2500, respectively, of a cold fracturing section of the composite article reported above as Example 2. The bar at the bottom of the micrographs represents 500 microns and 4 microns, respectively. As can be observed, the addition of the TCP has resulted in an improvement in the composite example's glass dispersion, as indicated by the reduction in the number of large glass agglomerates.

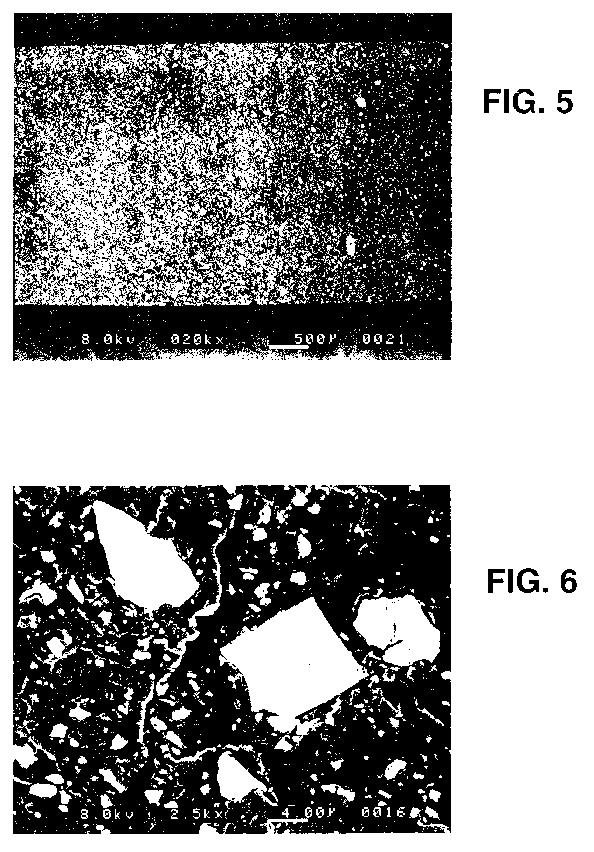

FIGS. 5 and 6 are scanning electron micrographs taken at magnifications of 20 and 2500, respectively, of a cold fracturing section of the composite article reported above as Example 3. The bar at the bottom of the micrographs represents 500 microns and 4 microns, respectively. As can be observed, the addition of the TCP has resulted in an improvement in the composite example's glass dispersion, as indicated by the reduction in the number of large glass agglomerates. In fact, at this stabilizer addition level (8.4%), it appears that TCP improves the glass/polymer compatibility to a point where the agglomeration of glass particles during mixing has practically been eliminated.

The above results are quantified in Table II wherein the improvement in glass dispersion in PES as result of the addition of the TCP stabilizer may be seen. Specifically, the number of glass particles larger than 100 µm is reduced as a result of the addition of the phosphoric acid stabilizer, i.e., reduction in the agglomeration of the glass particles. As explained below, this increase in dispersion or reduction in agglomeration leads to an increase in the composite materials' durability, i.e. an improvement in the composites resistance to moisture over time.

**TABLE II**

| Composite Example | Components | Weight Ratio | Number of glass particles larger than 100 µm (20mm² section) |
|---|---|---|---|
| 1 | P-glass/PES/-- | 50/50/0 | 40 |
| 2 | P-glass/PES/TCP | 48.5/48.5/3 | 20 |
| 3 | P-glass/PES/TCP | 45.8/45.8/8.4 | 3 |

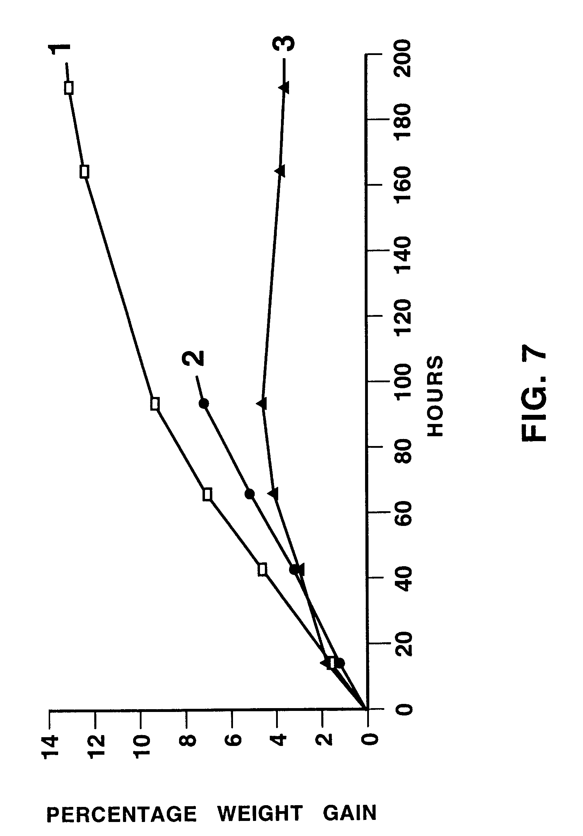

FIG. 7 reports that the addition of a phosphoric acid ester compatiblizing or stabilizing agent to the glass/polymer composite resulted in an increase in the composites' durability, or moisture resistance over time, as a result of the improvement of the phosphate glass dispersion; Examples 2 and 3 have decreased water retention, i.e., lower exhibited weight gain (less than 8% in 100 hours and less than 4% in 200 hours respectively), when compared to Comparative Example 1. Specifically, the accelerated durability test involved immersion of composite test bars in 95°C distilled water and measurements of the weight gain as a function of time.

While not intending to be limited by theory, the mechanism of stabilization, i.e., the increase in durability, was achieved by the addition of the phosphoric ester compatiblizer agent, TCP in the preferred embodiment, which acted similarly to that of a surfactant. It is contemplated that these phosphoric acid ester compatiblizing or stabilizer agents have one molecule end which is compatible with one material (the polymer) and another end which is compatible with the second material (the inorganic phosphate glass). Stated another way, the phosphoric acid ester likely acted like a typical surfactant in that it caused molecular compatibility at the interface between the inorganic material (phosphate glass) and the organic material (polymer). It is predicted that a driving force caused the phosphoric acid ester compatiblizing agent to preferentially move to the interface during compounding. This enhanced adhesion and affinity with resultant increase in dispersion of phosphate glass or reduced agglomeration, resulted in the improved performance of the material; the resultant composite was more durable against the hydrolysis which typically occurred at this interface.

## Claims

1. A composite material of increased resistance to moisture comprising a mixture of the following components:
(a) a matrix material comprised of at least one organic thermoplastic or thermosetting polymer;
(b) at least one phosphate glass; and,
(c) an amount of at least one phosphoric acid ester stabilizer component sufficient to improve the moisture resistance of the composite.

2. The composite material as claimed in claim 1 wherein the mixture is comprised of the components in following approximate indicated weight proportions
(a) 1-99.5% of the matrix material;
(b) 0.1-95% of the phosphate glass; and,
(c) 1 to 20% of the phosphoric acid ester stabilizer component.

3. The composite material as claimed in claim 1 wherein the mixture is comprised of the components in following approximate indicated weight proportions
(a) 4-95% of the matrix material;
(b) 1-90% of the phosphate glass; and,
(c) 1 to 20% of the phosphoric acid ester stabilizer component.

4. The composite as claimed in claim 1 wherein the phosphoric acid ester is selected from the group consisting of triarylphosphates such as trixylyphosphate, tricresylphosphate, triphenylphosphate, cresyldiphenylphosphate, t-butylphenyldiphenylphosphate and triisopropylphenylphosphate, alkyldiarylphosphates such as octyldiphenylphosphate, and trialkylphosphates such as tributylphosphate.

5. The composite as claimed in claim 1 wherein the phosphate glass consists essentially, expressed in terms of mole percent on the oxide basis, of at least 65% total of 10-55% ZnO, 28-40% P₂O₅, 10-35% R₂O, wherein R₂O consists of at least two alkali metal oxides in the indicated proportions selected from the group consisting of 0-25% Li₂O, 0-25% Na₂O, and 0-25% K₂O, and up to 35% total of optional ingredients in the indicated proportions selected from the group consisting of 0-10% Al₂O₃, 0-15% B₂O₃, 0-15% Cu₂O, 0-25% Sb₂O₃, 0-35% PbO, 0-35% SnO, 0-5% ZrO₂, 0-4% SiO₂, 0-20% MgO, 0-20% CaO, 0-20% SrO, 0-20% BaO and 0-10% MnO, 0-10% WO₃, 0-10% MoO₃, 0-5% rare earth metal oxide, and 0-5% F, as analyzed in weight percent' wherein the amount of Al₂O₃+B₂O₃ does not exceed 15%, the amount of WO₃+MoO₃ does not exceed 15% and MgO+CaO+SrO+BaO+MnO does not exceed 20%.

6. The composite as claimed in claim 1 wherein the matrix material is comprised of a high temperature thermoplastic selected from the group consisting of polyethersulfone, polypropylene, polyaryletherketones, polyolefins, acrylonitrilebutadiene-styrene copolymers, polystyrenes, polyphenylene sulfides, polyfluoro resins, polyetherimides, liquid crystal polyesters, polyetheretherketones, polyetherketones, polyethylterephthalates, polybutylterephthalates, melamines, polyamides, polyphosphazenes and polycarbonates or a high temperature thermoset selected from the group consisting of epoxy resins, silicone resins, polyimides, phenolics, and diallyl phthalates.

7. A method for making a composite of increased resistance to moisture, according to any one of claims 1-6, comprising the steps of:
(a) treating the phosphate glass with a solution containing an amount of at least one phosphoric acid ester component sufficient to improve the composite's resistance to moisture; and,
(b) thoroughly mixing the treated phosphate glass and the matrix material; and,
(c) shaping the mixture into an article of a desired geometry; and then
(d) cooling the article to room temperature.

8. The method as claimed in claim 7 wherein the thorough mixing step includes adding an amount of at least one phosphoric acid ester component sufficient to improve the moisture resistance of the composite.

9. A method for making a composite of increased resistance to moisture, according to any one of claims 1-6, comprising the steps of:
(a) thoroughly mixing the phosphate glass, the polymer, and an amount of at least one phosphoric acid ester stabilizer component sufficient to improve the moisture resistance of the composite; and,
(b) shaping the mixture into an article of a desired geometry; and then
(c) cooling the article to room temperature.
